# EUROPEAN PATENT SPECIFICATION

(11) **EP 3 147 615 B1**
(45) Date of publication and mention of the grant of the patent: **14.08.2019**
(21) Application number: 15186932.8
(22) Date of filing: 25.09.2015
(51) Int. Cl.: F28D 1/02, B60H 1/00, F28F 1/16, B60H 1/22

(54) **HEATING SYSTEM FOR VEHICLES, VEHICLE COMPRISING A HEATING SYSTEM AND A METHOD FOR HEATING A VEHICLE PASSENGER COMPARTMENT**
HEIZSYSTEM FÜR FAHRZEUGE, FAHRZEUG MIT EINEM HEIZSYSTEM UND VERFAHREN ZUM HEIZEN EINES FAHRZEUGFAHRGASTRAUMS
SYSTÈME DE CHAUFFAGE POUR VÉHICULE, VÉHICULE COMPRENANT UN TEL SYSTÈME ET PROCÉDÉ DE CHAUFFAGE D'UN HABITACLE DE VÉHICULE

(43) Date of publication of application: 29.03.2017
(73) Proprietor: Vehtec AB, 431 53 Mölndal (SE)
(72) Inventor: Nilsson, Johan, SE-471 74 Hjälteby (SE)
(74) Representative: Zacco Sweden AB

(56) References cited:
- WO-A1-2008/108726
- DE-A1-102004 059 335
- DE-U1-202009 002 307
- GB-A- 1 593 840
- US-A- 5 355 940

## Description

### TECHNICAL FIELD

Embodiments herein relate to a heating system for vehicles according to the preamble of claim 1. WO 2008/108726 discloses such a system. Embodiments herein further relate to a vehicle comprising a heating system and to a method for heating a vehicle passenger compartment.

### BACKGROUND

Commercial vehicles, such as buses and trains, normally comprise one or more passenger compartments. From time to time temperature and/or interior climate within such passenger compartments need to be adjusted. For example, the temperature within a vehicle passenger compartment may need to be increased during at least a part of a day or during colder seasons.

In order to control the temperature within their passenger compartments, commercial vehicles are often arranged with one or more heating systems which supplies heat from their respective vehicle engines or motors to heating elements within the respective passenger compartments. Such an engine or motor may e.g. be an internal combustion engine, a hybrid engine and/or an electric motor. The warm heating element or elements then exchange heat with colder air within the driver or passenger compartments whereby the driver or passenger compartments are heated.

Some heating systems are equipped with fans which can increases the heat transfer from a heating element to the air. In US2007114003A1 is disclosed a modular heating system for large vehicles. A heating element in US2007114003A1 includes a convector, with at least one essentially longitudinally extending pipe arranged to conduct a heating medium. The pipe is provided with a plurality of mutually spaced fins transversely mounted thereto. The system in US2007114003A1 further includes at least one blower module including at least one fan. Also, WO2011033138A1 discloses a modular heating element which comprises a built-in-fan.

The heating systems disclosed in US2007114003A1 and WO2011033138A1 may be suitable for some heating applications, but there still remains a need for a robust, cost efficient heating system with excellent heat exchange properties. Thus, improvements in the field of vehicle heating systems of the above kind are still desirable.

### SUMMARY

Embodiments herein aim to provide a heating system for vehicles, which is both robust, cost efficient and has excellent heat exchanging properties.

According to an embodiment, this is provided by a heating system for vehicles, the heating system comprising;
- an elongated radiator having a first radiator wall, a second radiator wall and at least one fluid channel for receiving a heated fluid interposed between the first radiator wall and the second radiator wall,
- an elongated convector comprising a convector wall and a plurality of elongated convector flanges which protrude out from the convector wall, each convector flange having a first edge, a second edge and a distal edge respectively,
the radiator being attached to the convector such that the first radiator wall faces the convector wall, wherein the heating system further comprises an air distribution arrangement which comprises an elongated hollow body having at least one air inlet adapted to receive an airflow and at least one air outlet for expelling the received airflow, the at least one air outlet being directed towards the second edges of the convector flanges, to direct an expelled airflow thereupon.

Since the heating system comprises an air distribution arrangement having an elongated hollow body, and where at least one air outlet is directed towards the second edges of the convector flanges, an airflow will pass between the second edge and the first edge of the convector flanges via gaps formed between the convector flanges. Hereby efficient heating of the airflow by the convector flanges is enabled.

In this manner the heating arrangement can be arranged to heat up its surroundings, such as a vehicle motor-, driver- and/or passenger compartment, very efficiently by a combination of radiation and forced convection. This combination has proven to be very efficient for achieving a rapid and cost efficient increase of the temperature within a e.g. passenger compartment.

When the heating system is mounted in a normal operating position within a passenger compartment of a vehicle, it will be arranged such that the second edges of the convector flanges will be facing downwards, towards a floor of the passenger compartment. The distal edges will be arranged to face towards a passenger compartment side wall. The first edges will be arranged facing upwards, towards a passenger compartment ceiling and/or a window, which normally is arranged above the heating system on the side wall to which the heating system is mounted. The second radiator wall will be facing a central part of the passenger compartment, i.e. normally towards an aisle and seats for passengers.

In this normal operating position the air distribution arrangement will be arranged beneath the convector and radiator. In particular, it will be positioned beneath the lower second edges of the convector flanges. Hereby the air distribution arrangement will be protected from wear and exposure, e.g. from exposure to passenger feet. This provides for a very robust and durable heating system. Further, since the air distribution arrangement will be arranged to be mounted below the convector flanges and therefore arranged to generate an airflow upwards, such that the air flows between the convector flanges and will be heated by the convector flanges in the upwardly directed flow, will meet and counteract the normally occurring relatively cold air downdraught or downdraft from the windows. During testing, this has proven to cause a very even and comfortable climate within the passenger compartment. Optionally, the air distribution can instead be arranged above the convector and the radiator.

Further, the heating system according to embodiments herein can be configured as a module. This facilitates manufacturing, mounting and planning, since a module can be arranged to be mounted into vehicle passenger compartments of different sizes. For example, a relatively small passenger compartment can be equipped with one or two modules while larger passenger compartments can be provided with additional modules according to size.

According to some embodiments the air distribution arrangement extends substantially in parallel with the second edges of the convector flanges and comprises a plurality of air outlets which are formed as slits or apertures. Hereby even and efficient heat exchange can be achieved along a length of the air distribution arrangement.

According to some embodiments the air distribution arrangement comprises a plurality of air outlets which are formed between lip-pairs which are directed inwards of the elongated hollow body. Hereby the air distribution arrangement and its outlets can be manufactured in a cost-efficient manner. In addition, the plurality of air outlets which are formed between lip-pairs which are directed inwards of the elongated hollow body increase both the stiffness and structural strength of the air distribution arrangement compared with air distribution arrangements without air outlets configured as lip-pairs. In some embodiments the air distribution arrangement comprises one single elongated outlet which is formed between a lip pair which is directed inwards of the hollow body.

According to some embodiments the second edges of at least some of the convector flanges are arranged between two lips forming a lip-pair. Since the second edges of at least some of the convector flanges are arranged between two lips which together form a lip-pair, the convector flanges and the air distribution arrangement will provide support to each other. Hereby the mechanical strength and robustness is further increased. Further, air directed from each outlet will be led alongside the heat exchanging surface of the flanges, which increases the heat exchange from the flanges to the airflow. Furthermore, since a portion of the flanges, which comprises the second edges, is arranged between two lips which are directed inwards of the elongated hollow body the heating system can be designed in a compact manner.

According to some embodiments the radiator and the convector are formed from an extruded metal or metal alloy. This provides for a strong and robust heating system.

According to some embodiments the first radiator wall, the second radiator wall and the at least one fluid channel is integrally formed from an extruded metal or metal alloy. Hereby strength is further increased and the heating system can be manufactured economically.

According to some embodiments the first radiator wall is shaped complementary to the convector wall and arranged in contact with the convector wall along at least 80% of the first radiator wall. Hereby heat can be distributed from the radiator to the convector very efficiently.

According to some embodiments the hollow body is formed as a cylinder, and where a distance between the at least one air outlet and the convector does not exceed a diameter of the cylinder. Hereby an air flow expelled from the air outlet will reach the convector flanges without unnecessary disturbance, e.g. due to turbulence of the flowing air. This allows the air to flow in a relatively laminar and directed manner until the airflow enters gaps formed between the convector flanges.

According to some embodiments the heating system further comprises at least one bracket, said at least one bracket comprising:
- first attachment means for attaching the bracket to a wall;
- second attachment means for attaching at least one of the elongated radiator and the elongated convector; and
- third attachment means for attaching the air distribution arrangement.

A common bracket for the positioning both the air distribution arrangement and at least one of the elongated radiator and the elongated convector provides for a compact, robust and economical heating arrangement. In addition, in some situations an abovementioned bracket can replace old fastening arrangements whereby the heating system with an air distribution arrangement according to embodiments described herein can be retrofitted into some prior art heating systems.

According to some embodiments the heating system comprises a fan connected to the air inlet of the air distribution arrangement, said fan being controllable to supply the air distribution arrangement with an air flow. Hereby supply of an airflow can be achieved by an integral part of the arrangement.

According to some embodiments the fan is a radial fan which is arranged within the elongated hollow body of the air distribution arrangement. Hereby the fan and the air distribution arrangement can be manufactured as a separate unit. This can facilitate manufacture and mounting of the heating system and such a separate unit can also be retrofitted to some prior-art-heating systems. Further, the heating system according to embodiments herein can be configured as a module which comprises a fan. This facilitates manufacture, mounting and planning, since such a module can be arranged to be mounted into vehicle passenger compartments of different sizes. For example, a relatively small passenger compartment can be equipped with one or two modules while larger passenger compartments can be provided with additional modules according to size.

According to some embodiments the air flow provided by the fan is arranged to be expelled from the air outlets at a velocity of 1-2 m/s. Hereby an efficient forced convection can be achieved.

According to some embodiments the heating system comprises a pump and at least one conduit which is connected to the at least one fluid channel and to at least one of a cooling system of a vehicle internal combustion engine and an external fluid heater, said pump being controllable to circulate a fluid within the at least one conduit and the at least one fluid channel. Hereby a vehicle passenger compartment can be heated in an efficient manner.

Thus, hereby is provided a heating system for vehicles, which is both robust, cost efficient and has excellent heat exchange properties.

Embodiments herein also aim to provide a vehicle which comprises one or more heating systems within a passenger compartment of the vehicle.

According to some embodiments, this is provided by a vehicle which comprises a passenger compartment which, in turn, comprises one or more vehicle heating systems according to embodiments disclosed herein.

Embodiments herein also aim to provide a method for efficiently heating a vehicle passenger compartment.

According to some embodiments, this is provided by a method for heating a vehicle passenger compartment by means of a heating system which comprises;
- an elongated radiator having a first radiator wall, a second radiator wall and at least one fluid channel for receiving a heated fluid interposed between the first radiator wall and the second radiator wall,
- an elongated convector comprising a convector wall and a plurality of elongated convector flanges which protrude out from the convector wall, the radiator being attached to the convector such that the first radiator wall faces the convector wall,
- a pump and at least one conduit which is connected to the at least one fluid channel and to at least one of a cooling system of a vehicle internal combustion engine and an external fluid heater, said pump being controllable to circulate fluid within the at least one conduit and the at least one fluid channel,
- a fan controllable to supply an air flow,
wherein the heating system further comprises an air distribution arrangement having at least one air inlet adapted to receive an airflow from the fan and at least one air outlet for expelling the received airflow, the at least one air outlet being directed towards the convector flanges to direct an expelled airflow thereupon, and in that the method comprises;
- heating fluid by at least one of the cooling system of the vehicle internal combustion engine and the external fluid heater,
- pumping, by the pump, the heated fluid trough the at least one fluid channel,
- expelling, via the at least one air outlet of the air distribution arrangement, an air flow upon the elongated convector flanges.

### BRIEF DESCRIPTION OF THE DRAWINGS

The various aspects of embodiments herein, including its particular features and advantages, will be readily understood from the following detailed description and the accompanying drawings, in which:
Fig. 1 illustrates a heating system according to some embodiments,
Fig. 2 illustrates a side view of the Fig. 1 heating system,
Fig. 3 illustrates a heating system according to some alternative embodiments,
Fig. 4a illustrates the Fig. 3 heating system from another view,
Fig. 4b illustrates the heating system according to an alternative embodiment,
Fig. 5a, 5b and 5c illustrate some features of a heating system according to three different embodiments herein,
Fig. 6 illustrates a method for heating a vehicle passenger compartment, and
Fig. 7 illustrates a vehicle which comprises a heating system according to embodiments described herein.

### DETAILED DESCRIPTION

Embodiments herein will now be described more fully with reference to the accompanying drawings, in which some embodiments are shown. Like numbers refer to like elements throughout. Well-known functions or constructions will not necessarily be described in detail for brevity and/or clarity.

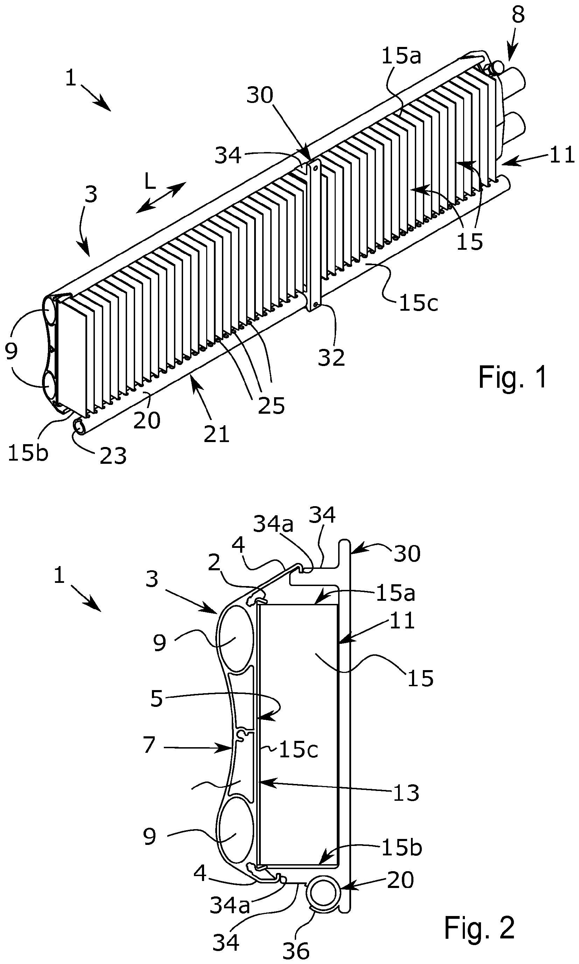

Fig. 1 illustrates a heating system 1 for vehicles. The heating system 1 can therefore also be referred to as a vehicle heating system.

The heating system 1 comprises an elongated radiator 3. The radiator 3 comprises a first radiator wall and a second radiator wall (further illustrated in Fig. 2 below). The radiator 3 further comprises at least one fluid channel 9 for receiving a heated fluid. The at least one fluid channel is interposed between the first radiator wall and the second radiator wall (also further illustrated in Fig. 2 below). In the embodiment depicted in Fig. 1 the radiator 3 comprises two fluid channels 9, arranged substantially in parallel with each other.

The heating system 1 also comprises an elongated convector 11. The convector 11 comprises a convector wall and a plurality of elongated convector flanges **15** which protrude outwardly from the convector wall. Each convector flange 15 comprises a first edge **15a,** a second edge **15b** and a distal edge **15c** respectively.

In the embodiment illustrated in Fig. 1 the convector flanges 15 are arranged as a plurality of flat rectangular plates which are arranged in parallel to each other. In other embodiments the convector flanges can be e.g. corrugated, comprise a number of protrusions and/or apertures and/or being chamfered.

The radiator 3 is attached to the convector 11 such that the first radiator wall 5 faces the convector wall.

The heating system 1 further comprises an air distribution arrangement **20** which comprises an elongated hollow body **21.** The elongated hollow body 21 comprises at least one air inlet **23** and at least one air outlet **25.** In the embodiment depicted in Fig. 1 the elongated hollow body 21 is formed as a cylinder, and the air inlet 23 is arranged at an end portion of the cylinder. The hollow body 21 can alternatively have other shapes than a cylinder. For example it can e.g. be shaped with a rectangular cross section, a triangular cross section, an oval cross section or similar.

The at least one air inlet 23 is adapted to receive an airflow from a fan and the at least one air outlet 25 is arranged to expel the airflow when it has passed the interior of the hollow body 21. In the embodiment depicted in Fig. 1 a plurality of air outlets 25 are arranged at a side of the cylinder which is directed towards the convector flanges 15. Hereby the airflow from a fan is distributed along a length of the air distribution arrangement 20 in a longitudinal direction L. The airflow can be expelled in a direction substantially perpendicular to the longitudinal direction L. Thus, when the heating system 1 is mounted in a normal operating position the longitudinal direction L can extend substantially horizontally along e.g. a passenger compartment floor. The airflow can then be expelled vertically in a direction upwards.

In the embodiment illustrated in Fig. 1 the at least one air outlet 25 is directed towards the second edges 15b of the convector flanges 15.

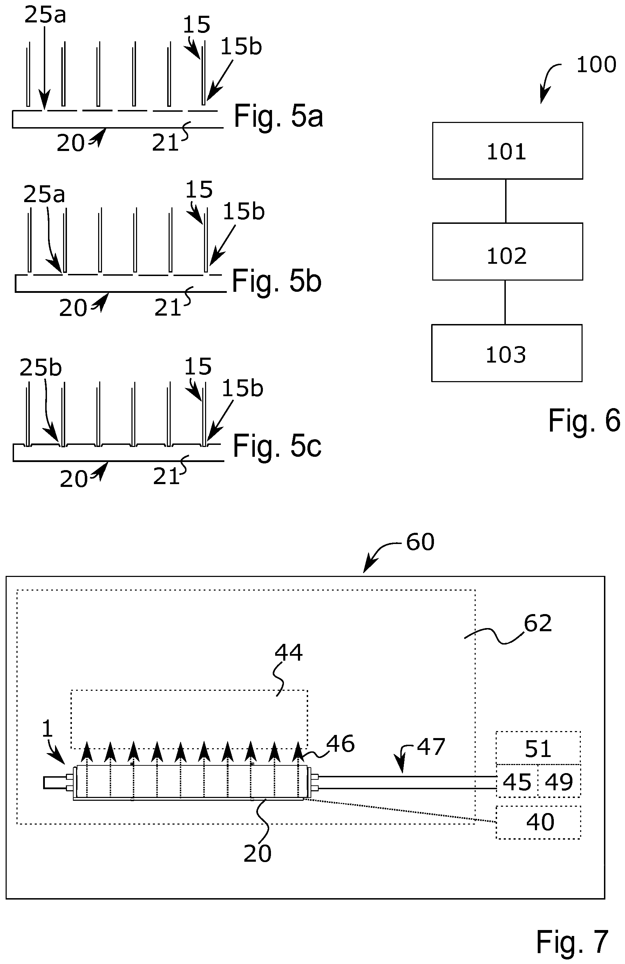

In the embodiment illustrated in Fig. 1 the air distribution arrangement 20 extends substantially in parallel with the second edges 15b of the convector flanges 15. The air distribution arrangement 20 comprises a plurality of air outlets 25 which are formed as slits, slots or apertures. The slits or apertures are denominated 25a in Fig. 5a and Fig. 5b. Since the air outlets 25 are distributed over a substantial length of the air distribution arrangement 20, the airflow expelled through the plurality of air outlets 25 will form a common warm and upwardly-directed air curtain.

The radiator 3, the convector 11 and/or the air distribution arrangement 20 can be formed from an extruded metal or metal alloy. The radiator 3, the convector 11 and/or the air distribution arrangement 20 can for example be formed from aluminium, aluminium-alloy or any other type of metal. In some embodiments the radiator 3, the convector 11, the air distribution arrangement 20 and/or any constructional details thereof can be made of polymers and/or plastic materials, such as durable polymers and/or plastic materials with excellent heat exchanging properties. Hereby heat from the fluid channels 9 can be transferred, at least partly, by the polymers/plastic materials.

In some embodiments the first radiator wall, the second radiator wall and the at least one fluid channel 9 are integrally formed from an extruded metal or metal alloy. Also the air distribution arrangement 20 can be formed from an extruded metal or metal alloy.

In the embodiment illustrated in Fig. 1 a distance between the at least one air outlet 25 and the convector 11 does not exceed a diameter of the cylinder.

In Fig. 2 the heating arrangement 1 is illustrated from a short side, i.e. as seen along the longitudinal direction L.

The radiator 3 is attached to the convector 11 such that the first radiator wall **5** faces the convector wall **13.** The first radiator wall 5 is shaped complementary to the convector wall 13 and arranged in contact with the convector wall 13. In the embodiment illustrated in Fig. 2 both the first radiator wall and the convector wall are substantially flat and pressed against each other. When warm fluid is led trough the fluid channels 9, heat from the liquid is distributed to material which forms the radiator 3. Thus, the radiator 3 will be heated. When the radiator 3 has a higher temperature than its surrounding, heat will be transferred to its surrounding. Some of the heat will be distributed to the second radiator wall **7.** The second radiator wall 7 will then heat its surrounding by radiation. Some of the heat from the radiator 3 will, via the relatively large contact surface between the first radiator wall 5 and the convector wall 3, be distributed to the convector 11. A large portion of the heat will be dissipated to the surrounding air via the convector flanges 15. Since the air distribution arrangement 20 is arranged to direct an airflow towards the convector flanges 15 the heated flanges will distribute heat to the surrounding air efficiently by forced convection.

For an efficient thermal contact between the first radiator wall 5 and the convector wall 3, the contact surface there between should be as large as possible. In the embodiment illustrated in Fig. 2 the radiator 3 and the convector 11 are pressed to each other and positioned via projections **2.** In other embodiments the radiator 3 and the convector 11 are attached to each other via other types of mechanical locking, attachment arrangements, such as: glue, welding, soldering or similar.

The heating system 1 in the embodiment illustrated in Fig. 1 and Fig. 2 further comprises at least one bracket **30,** which comprises first attachment means **32** for attaching the bracket to a wall. Such first attachment means 32 can for example comprise one or more through-holes, arranged to receive a screw, bolt or similar. Such first attachment means 32 can also/alternatively comprise one or more hooks, projecting members, threaded members, bayonet couplings, male/female attachment organs, snap-connections or similar. Hereby the bracket 30 can be securely mounted to e.g. a side wall of a vehicle passenger compartment.

The at least one bracket 30 further comprises second attachment means **34** for attaching at least one of the elongated radiator 3 and the elongated convector 11 to the bracket 30. In the embodiment illustrated in Fig. 1 and Fig. 2 the second attachment means 34 comprises grooves **34a** into which upper and lower end flanges **4** of the radiator 3 can be snapped. The second attachment means 34 can also/alternatively comprise one or more hooks, projecting members, threaded members, bayonet couplings, male/female attachment organs, glue or similar. In some embodiments the second attachment means 34 are arranged to be attached to the convector 11.

The at least one bracket 30 further comprises third attachment means **36** for attaching the air distribution arrangement 20 to the bracket 30. Hereby the bracket 30 can, when it is attached to a wall, securely position the convector 11, the radiator 3 and the air distribution arrangement 20 relatively itself and the wall to which it is attached. The third attachment means 36 can for example comprise one or more hooks, snap organs, projecting members, threaded members, bayonet couplings, male/female attachment organs or similar.

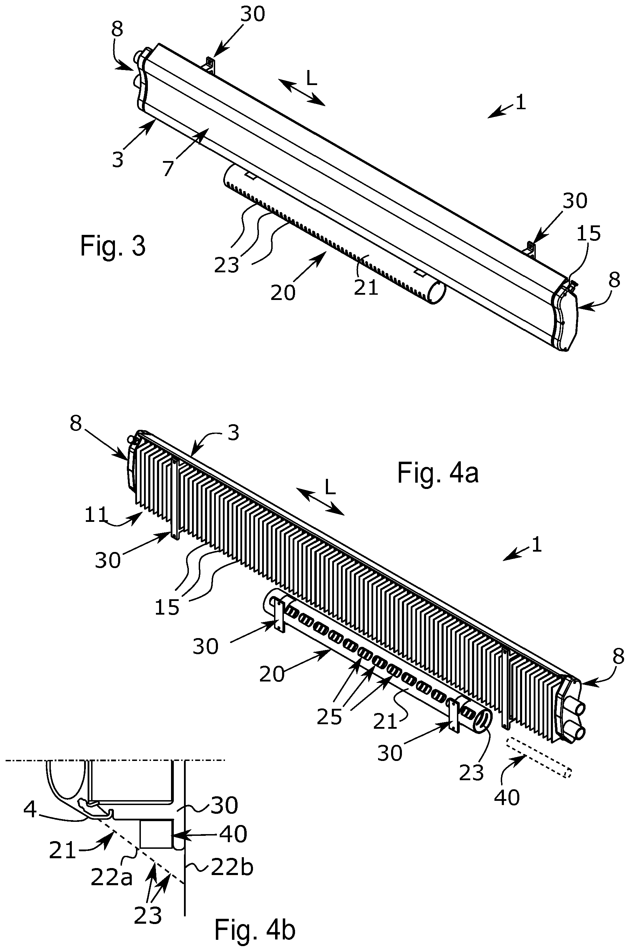

While the embodiments illustrated in Fig. 1 and Fig. 2, preferably but not necessarily, are arranged to be connected to an external fan, further illustrated in 7, the heating system 1 according to the embodiments illustrated in **Fig. 3, Fig. 4a** and **Fig. 4b** can comprise a fan 40. The fan 40 can e.g. be a centrifugal fan 40, which is arranged within the elongated hollow body 21 of the air distribution arrangement 20. The fan 40 is arranged to convey an airflow from the air inlet or air inlets 23 to the air outlet or air outlets 25. In some embodiments the air inlet or air inlets 23 is/are arranged at short sides of the elongated hollow body 21.

The airflow is arranged to be expelled from the air outlets 25 towards the convector flanges 15. The velocity of the airflow can e.g. be arranged to be 1-2 m/s. In some embodiments the velocity of the airflow can be arranged to be 1.3-1.7 m/s.

In the embodiment illustrated in Fig. 3 and Fig. 4a different brackets 30 for the radiator 3 / the convector 11 and for the air distribution arrangement 20 are illustrated. However, also the embodiments illustrated in Fig. 3 and Fig. 4a can have a respective common bracket 30 for the convector 11, the radiator 3 and the air distribution arrangement 20, as described in conjunction with Fig. 1 and Fig. 2.

Different kind of fans 40 can be used for conveying air from the air inlet or air inlets 23 to the air outlet or air outlets 25. For example an axial fan, a centrifugal fan, a radial fan, a fan with forward curved blades, a fan with backward curved blades or similar can be used. The elongated hollow body 21 can then itself act as a fan housing for an electrically driven fan wheel or similar.

In the embodiments illustrated in **Fig. 4b** the hollow body 21 is partly formed by a perforated plate **22a.** The perforated plate 22a forms the hollow body 21 together with a plate or a wall portion **22b** to which it is attached. In some embodiment the perforated plate 22a has a curvature, such that is forms the hollow body 21 with the wall portion 22b only, in other embodiments further plates or similar can be used for delimiting the hollow body 21.

Fans 40 described herein, such as the fan 40 depicted in Fig. 4b, can be e.g. a crossflow blower. The fan 40 can then receive an airflow via perforations **23** in the perforated plate 22a and expel the airflow via air outlets comprises in the fan and/or via perforations in a further plate (not shown) arranged between the fan 40 and the convector flanges.

The heating system 1 as described herein, e.g. in conjunction with Figs. 1-4, can also comprise one or more end-caps **8.** Such end-caps 8 can connect one fluid channel 9 to another fluid channel 9 by forming a U-channel at the end of the radiator 3. Such end-caps 8 can also be used to connect the fluid channels 9 to conduits, as illustrated in Fig. 7. Such end-caps 8 can also be used to connect two or more heating systems 1 with each other, such that heated fluid can be fed through a plurality of interconnected heating systems 1. Each heating system 1 can be referred to as a separate module, and the number of modules can e.g. be adapted to a size of a vehicle passenger compartment into which the modules are to be mounted. The heated fluid can be configured to flow with a counter-current flow or with a parallel flow within the fluid channels 9.

In **Fig. 5a, Fig. 5b** and **Fig. 5c** three different embodiments of the air distribution arrangement 21 are illustrated. In Fig. 5a slits or apertures **25a** are configured to expel an airflow upwards between the convector flanges 15. The air distribution arrangement 20 extends substantially in parallel with the second edges 15b of the convector flanges 15. In Fig. 5b the slits or apertures 25a are configured to expel an airflow upwards, substantially towards the second edges 15b of at least some of the flanges 15.

In the embodiment illustrated in Fig. 5c the air distribution arrangement 20 comprises a plurality of air outlets 25 which are formed between lip-pairs **25b** which are directed inwards of the elongated hollow body 21. The second edges 15b of at least some of the convector flanges 15 are arranged between two lips forming a lip-pair 25b. The second edges 15b of at least some of the convector flanges 15 can be positioned by the lip-pair 25b. Thus, at least some of the convector flanges 15 can be in contact with and supported by the lip pairs 25b.

**Fig. 6** illustrates a method **100** for heating a vehicle passenger compartment by means of a heating system which comprises; an elongated radiator having a first radiator wall, a second radiator wall and at least one fluid channel for receiving a heated fluid interposed between the first radiator wall and the second radiator wall. The heating system further comprises an elongated convector with a convector wall and a plurality of elongated convector flanges which protrude out from the convector wall, the radiator being attached to the convector such that the first radiator wall faces the convector wall.

The heating system also comprises a pump and at least one conduit which is connected to the at least one fluid channel and to at least one of a cooling system of a vehicle internal combustion engine and an external fluid heater, said pump being controllable to circulate fluid within the at least one conduit and the at least one fluid channel. Also a fan 40 which is controllable to supply an air flow is arranged within the heating system.

The heating system 1 further comprises an air distribution arrangement having at least one air inlet adapted to receive an airflow from the fan and at least one air outlet for expelling the received airflow. The at least one air outlet is/are directed towards the convector flanges to direct an expelled airflow thereupon.

The method 100 comprises: Heating **101** fluid by at least one of the cooling system of the vehicle internal combustion engine and the external fluid heater. Pumping **102,** by the pump, the heated fluid trough the at least one fluid channel. Expelling **103,** via the at least one air outlet of the air distribution arrangement, an air flow upon the elongated convector flanges.

**Fig. 7** illustrates a vehicle **60.** The vehicle 60 can e.g. be a bus, a train, a tram, a multipurpose vehicle, a van, a car, a construction equipment vehicle, a mining operation vehicle, a vessel or any other type of vehicle with a passenger or driver compartment **62.**

The schematically illustrated vehicle 60 in Fig. 7 comprises a heating system 1 according to embodiments described herein. The heating system 1 can, e.g. as shown here, be mounted on a side wall of the passenger compartment 62 of the vehicle 60.

The heating system 1 comprises a pump **45** and at least one conduit **47.** The at least one conduit 47 operatively connects the at least one fluid channel 9 with at least one of a cooling system **49** of a vehicle internal combustion engine and an external fluid heater **51.** Fluid can be heated by the cooling system 49 and/or the external fluid heater 51. Optionally the external fluid heater 51 is arranged outside of the vehicle 60, such as at a bus terminal, bus garage, bus depot or similar.

The pump 45 can be controllable to circulate a fluid within the at least one conduit 47 and the at least one fluid channel 9, such that fluid is heated by the cooling system 49 and/or the external fluid heater 51 and fed through the radiators 3. In the one or more radiators 3 heat from the heated fluid is dissipated into the passenger compartment.

The air distribution arrangement 20 is arranged to direct an airflow upwards, as illustrated with arrows **46.** Hereby relatively cold air, e.g. in a vicinity of a vehicle window **44,** will be heated.

The fluid, which is heated by the cooling system 49 and/or the external fluid heater 51, can for example be heated to 50-90 degrees Celsius. In some applications other temperatures are possible. A heating effect of the heating system 1 can e.g. be between 500-3000 Watts for every length-meter of the radiator 3. The heating system 1 can optionally also comprise a number of sensors and control means, which can be used to activate and operate the heating system 1 in accordance with manual input, such as e.g. temperature ranges, pre-set cycles or similar.

In some embodiments the heating system according to embodiments described herein comprises sodium sulfate or Glauber's salt (Na₂SO₄/ Na₂SO₄·10H₂O). Such sodium sulfate or Glauber's salt is used as a heat battery, and may heat e.g. the radiator 3 and/or the convector 11 by a chemical process or reaction.

The heating system according to the embodiments herein can also be arranged to have a cooling capacity; it can then be referred to as a climate system or a vehicle climate system. Liquid can be cooled e.g. in a vehicle cooler, HVAC-system or the like. Relatively cold liquid can then be pumped through the conduits and fluid channels as described herein. The radiator and convector will then be cooled by the fluid. When a temperature of the radiator and convector is lower than its surrounding they will decrease e.g. a passenger compartment temperature.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. A vehicle heating system (1), the heating system (1) comprising;
- an elongated radiator (3) having a first radiator wall (5), a second radiator wall (7) and at least one fluid channel (9) for receiving a heated fluid interposed between the first radiator wall (5) and the second radiator wall (7),
- an elongated convector (11) comprising a convector wall (13) and a plurality of elongated convector flanges (15) which protrude out from the convector wall (13),
the radiator (3) being attached to the convector (11) such that the first radiator wall (5) faces the convector wall (13), **characterized in that** each convector flange (15) has a first edge (15a), a second edge (15b) and a distal edge (15c) respectively and **in that** the heating system (1) further comprises an air distribution arrangement (20) which comprises an elongated hollow body (21) having at least one air inlet (23) adapted to receive an airflow and at least one air outlet (25) for expelling the received airflow, the at least one air outlet (25) being directed towards the second edges (15b) of the convector flanges (15), to direct an expelled airflow thereupon.

2. The heating system (1) according to claim 1, **wherein** the air distribution arrangement (20) extends substantially in parallel with the second edges (15b) of the convector flanges (15) and comprises a plurality of air outlets (25) which are formed as slits or apertures (25a).

3. The heating system (1) according to claim 1, **wherein** the air distribution arrangement (20) comprises a plurality of air outlets (25) which are formed between lip-pairs (25b) which are directed inwards of the elongated hollow body (21).

4. The heating system (1) according to claim 3, **wherein** the second edges (15b) of at least some of the convector flanges (15) are arranged between two lips forming a lip-pair (25b).

5. The heating system (1) according to any one of the preceding claims **wherein** the radiator (3) and the convector (11) are formed from an extruded metal or metal alloy.

6. The heating system (1) according to any one of the preceding claims **wherein** the first radiator wall (5), the second radiator wall (7) and the at least one fluid channel (9) is integrally formed from an extruded metal or metal alloy.

7. The heating system (1) according to any one of the preceding claims **wherein** the first radiator wall (5) is shaped complementary to the convector wall (13) and arranged in contact with the convector wall (13) along at least 80% of the first radiator wall (5).

8. The heating system (1) according to any one of the preceding claims **wherein** the hollow body (21) is formed as a cylinder, and where a distance between the at least one air outlet (25) and the convector (11) does not exceed a diameter of the cylinder.

9. The heating system (1) according to any one of the preceding claims **wherein** the heating system (1) further comprises at least one bracket (30), said at least one bracket (30) comprising:
- first attachment means (32) for attaching the bracket to a wall;
- second attachment means (34) for attaching at least one of the elongated radiator (3) and the elongated convector (11); and
- third attachment means (36) for attaching the air distribution arrangement (20).

10. The heating system (1) according to any one of the preceding claims **wherein** the heating system (1) comprises a fan (40) connected to the air inlet of the air distribution arrangement (20), said fan being controllable to supply the air distribution arrangement with an air flow.

11. The heating system (1) according to claim 10 **wherein** the fan (40) is a radial fan which is arranged within the elongated hollow body (21) of the air distribution arrangement (20).

12. The heating system (1) according to claim 10 or 11 **wherein** the air flow provided by the fan (40) is arranged to be expelled from the air outlets (25) at a velocity of 1-2 m/s.

13. The heating system (1) according to any one of the preceding claims **wherein** the heating system (1) comprises a pump (45) and at least one conduit (47) which is connected to the at least one fluid channel (9) and to at least one of a cooling system (49) of a vehicle internal combustion engine and an external fluid heater (51), said pump (45) being controllable to circulate a fluid within the at least one conduit (47) and the at least one fluid channel (9).

14. A vehicle (60), **characterized in that** the vehicle (60) has a passenger compartment (62) which comprises one or more heating systems (1) according to any one of claims 1-13.

15. A method (100) for heating a vehicle passenger compartment (62) by means of a heating system (1) which comprises;
- an elongated radiator (3) having a first radiator wall (5), a second radiator wall (7) and at least one fluid channel (9) for receiving a heated fluid interposed between the first radiator wall (5) and the second radiator wall (7),
- an elongated convector (11) comprising a convector wall (13) and a plurality of elongated convector flanges (15) which protrude out from the convector wall (13), the radiator (3) being attached to the convector (11) such that the first radiator wall (5) faces the convector wall (13),
- a pump (45) and at least one conduit (47) which is connected to the at least one fluid channel (9) and to at least one of a cooling system (49) of a vehicle internal combustion engine and an external fluid heater (51), said pump (45) being controllable to circulate fluid within the at least one conduit (47) and the at least one fluid channel (9),
- a fan (40) controllable to supply an air flow,
**characterized in that** the heating system (1) further comprises an air distribution arrangement (20) having at least one air inlet (23) adapted to receive an airflow from the fan (40) and at least one air outlet (25) for expelling the received airflow, the at least one air outlet (25) being directed towards the convector flanges (15) to direct an expelled airflow thereupon, and **in that** the method (100) comprises;
- heating (101) fluid by at least one of the cooling system (49) of the vehicle internal combustion engine and the external fluid heater (51),
- pumping (102), by the pump (45), the heated fluid trough the at least one fluid channel (9),
- expelling (103), via the at least one air outlet (25) of the air distribution arrangement (20), an air flow upon the elongated convector flanges (15).

## Patentansprüche

1. Heizsystem (1) für Fahrzeuge, wobei das Heizsystem (1) Folgendes umfasst;
- einen länglichen Radiator (3) mit einer ersten Radiatorwand (5), einer zweiten Radiatorwand (7) und mindestens einen Fluidkanal (9) zur Aufnahme eines erhitzten Fluids, das zwischen der ersten Radiatorwand (5) und der zweiten Radiatorwand (7) angeordnet ist,
- einen länglichen Konvektor (11) umfassend eine Konvektorwand (13) und eine Mehrzahl von länglichen Konvektorflanschen (15), die von der Konvektorwand (13) vorstehen,
wobei der Radiator (3) an dem Konvektor (11) derart befestigt ist, dass die erste Radiatorwand (5) der Konvektorwand (13) zugewandt ist, **dadurch gekennzeichnet, dass** jeder Konvektorflansch (15) bzw. einen ersten Rand (15a), einen zweiten Rand (15b) und einen distalen Rand (15c) aufweist, und dass das Heizsystem (1) ferner eine Luftverteilungsanordnung (20) umfasst, welche einen länglichen Hohlkörper (21) umfasst, der mindestens einen zur Aufnahme eines Luftstroms ausgebildeten Lufteinlass (23) und mindestens einen Luftauslass (25) zum Ausstoßen des aufgenommenen Luftstroms aufweist, wobei der mindestens eine Lufteinlass (25) gegen die zweiten Ränder (15b) der Konvektorflansche (15) gerichtet ist, um einen ausgestoßenen Luftstrom darauf zu richten.

2. Heizsystem (1) nach Anspruch 1, **wobei** die Luftverteilungsanordnung (20) sich im Wesentlichen parallel zu den zweiten Rändern (15b) der Konvektorflansche (15) erstreckt und eine Mehrzahl von Luftauslässen (25) umfasst, die als Schlitze oder Öffnungen (25a) gebildet sind.

3. Heizsystem (1) nach Anspruch 1, **wobei** die Luftverteilungsanordnung (20) eine Mehrzahl von Lufteinlässen (25) umfasst, die zwischen Paaren von Lippen (25b) gebildet sind, die nach innen vom länglichen Hohlkörper (21) gerichtet sind.

4. Heizsystem (1) nach Anspruch 3, **wobei** die zweiten Ränder (15b) zumindest einiger der Konvektorflansche (15) zwischen zwei ein Paar von Lippen (25b) bildenden Lippen angeordnet sind.

5. Heizsystem (1) nach einem der vorgehenden Ansprüche, **wobei** der Radiator (3) und der Konvektor (11) aus einem extrudierten Metall oder einer Metalllegierung gebildet sind.

6. Heizsystem (1) nach einem der vorgehenden Ansprüche, **wobei** die erste Radiatorwand (5), die zweite Radiatorwand (7) und der mindestens eine Fluidkanal (9) aus einem extrudierten Metall oder einer Metalllegierung einstückig ausgebildet sind.

7. Heizsystem (1) nach einem der vorgehenden Ansprüche, **wobei** die erste Radiatorwand (5) komplementär zur Konvektorwand (13) gebildet ist und in Berührung mit der Konvektorwand (13) entlang zu mindestens 80 % der ersten Radiatorwand (5) angeordnet ist.

8. Heizsystem (1) nach einem der vorgehenden Ansprüche, wobei der Hohlkörper (21) zylinderförmig ist, und wobei ein Abstand zwischen dem mindestens einen Luftauslass (25) und dem Konvektor (11) einen Durchmesser des Zylinders nicht übersteigt.

9. Heizsystem (1) nach einem der vorgehenden Ansprüche, **wobei** das Heizsystem (1) ferner mindestens eine Klammer (30) umfasst, wobei die mindestens eine Klammer (30) Folgendes umfasst:
- erste Befestigungsmittel (32) zur Befestigung der Klammer an einer Wand;
- zweite Befestigungsmittel (34) zur Befestigung mindestens eines des länglichen Radiators (3) und des länglichen Konvektors (11); und
- dritte Befestigungsmittel (36) zur Befestigung der Luftverteilungsanordnung (20).

10. Heizsystem (1) nach einem der vorgehenden Ansprüche, **wobei** das Heizsystem (1) ein Gebläse (40) umfasst, das mit dem Lufteinlass der Luftverteilungsanordnung (20) verbunden ist, wobei das Gebläse zur Versorgung der Luftverteilungsanordnung mit einem Luftstrom gesteuert werden kann.

11. Heizsystem (1) nach Anspruch 10, **wobei** das Gebläse (40) ein Radialgebläse ist, das innerhalb des länglichen Hohlkörpers (21) der Luftverteilungsanordnung (20) angeordnet ist.

12. Heizsystem (1) nach Anspruch 10 oder 11, **wobei** der durch das Gebläse (40) bereitgestellte Luftstrom eingerichtet ist, um von den Luftauslässen (25) bei einer Geschwindigkeit von 1-2 m/s ausgestoßen zu werden.

13. Heizsystem (1) nach einem der vorgehenden Ansprüche, **wobei** das Heizsystem (1) eine Pumpe (45) und mindestens eine Leitung (47) umfasst, die mit dem mindestens einen Fluidkanal (9) und mit mindestens einem von einem Kühlsystem (49) eines Fahrzeugverbrennungsmotors und einem externen Fluiderhitzer (51) verbunden ist, wobei die Pumpe (45) zum Zirkulieren eines Fluids innerhalb der mindestens einen Leitung (47) und des mindestens einen Fluidkanals (9) gesteuert werden kann.

14. Fahrzeug (60), **dadurch gekennzeichnet, dass** das Fahrzeug (60) einen Fahrgastraum (62) aufweist, der ein oder mehrere Heizsysteme (1) nach einem der Ansprüche 1-13 umfasst.

15. Verfahren (100) zum Heizen eines Fahrzeugfahrgastraums (62) mittels eines Heizsystems (1), welches Folgendes umfasst;
- einen länglichen Radiator (3) mit einer ersten Radiatorwand (5), einer zweiten Radiatorwand (7) und mindestens einen Fluidkanal (9) zur Aufnahme eines erhitzten Fluids, das zwischen der ersten Radiatorwand (5) und der zweiten Radiatorwand (7) angeordnet ist,
- einen länglichen Konvektor (11) umfassend eine Konvektorwand (13) und eine Mehrzahl von länglichen Konvektorflanschen (15), die von der Konvektorwand (13) vorstehen, wobei der Radiator (3) an dem Konvektor (11) derart befestigt ist, dass die erste Radiatorwand (5) der Konvektorwand (13) zugewandt ist,
- eine Pumpe (45) und mindestens eine Leitung (47), die mit dem mindestens einen Fluidkanal (9) und mit mindestens einem von einem Kühlsystem (49) eines Fahrzeugs mit Verbrennungsmotor und einem externen Fluiderhitzer (51) verbunden ist, wobei die Pumpe (45) zum Zirkulieren eines Fluids innerhalb der mindestens einen Leitung (47) und des mindestens einen Fluidkanals (9) gesteuert werden kann.
- ein Gebläse (40), das zum Bereitstellen eines Luftstroms gesteuert werden kann,
**dadurch gekennzeichnet, dass** das Heizsystem (1) ferner eine Luftverteilungsanordnung (20) umfasst, die mindestens einen Lufteinlass (23) zur Aufnahme eines Luftstroms von dem Gebläse (40) und mindestens einen Luftauslass (25) zum Ausstoßen des aufgenommenen Luftstroms aufweist, wobei der mindestens eine Luftauslass (25) gegen die Konvektorflansche (15) gerichtet ist, um einen ausgestoßenen Luftstrom darauf zu richten, und dass das Verfahren (100) Folgendes umfasst;
- Erhitzen (101) von Fluid durch mindestens eines von dem Kühlsystem (49) des Fahrzeugverbrennungsmotors und dem externen Fluiderhitzer (51),
- Pumpen (102), durch die Pumpe (45), des erhitzten Fluids durch den mindestens einen Fluidkanal (9),
- Ausstoßen (103), über den mindestens einen Luftauslass (25) der Luftverteilungsanordnung (20), eines Luftstroms auf die länglichen Konvektorflansche (15).

## Revendications

1. Système de chauffage (1) pour véhicules, le système de chauffage (1) comprenant ;
- un radiateur allongé (3) ayant une première paroi de radiateur (5), une deuxième paroi de radiateur (7) et au moins un canal de fluide (9) destiné à recevoir un fluide chauffé interposé entre la première paroi de radiateur (5) et la deuxième paroi de radiateur (7),
- un convecteur allongé (11) comprenant une paroi de convecteur (13) et une pluralité de brides allongées de convecteur (15) qui font saillie hors de la paroi de convecteur (13),
le radiateur (3) étant fixé au convecteur (11) si bien que la première paroi de radiateur (5) fait face à la paroi de convecteur (13),
**caractérisé en ce que** chaque bride de convecteur (15) comporte respectivement un premier bord (15a), un deuxième bord (15b) et un bord distal (15c), et **en ce que** le système de chauffage (1) comprend en outre un agencement de distribution d'air (20) qui comprend un corps creux allongé (21) ayant au moins une entrée d'air (23) adaptée pour recevoir un flux d'air et au moins une sortie d'air (25) pour expulser le flux d'air reçu, l'au moins une sortie d'air (25) étant dirigée vers les deuxièmes bords (15b) des brides de convecteur (15), pour y diriger un flux d'air expulsé.

2. Système de chauffage (1) selon la revendication 1, **dans lequel** l'agencement de distribution d'air (20) s'étend essentiellement parallèlement aux deuxièmes bords (15b) des brides de convecteur (15) et comprend une pluralité de sorties d'air (25) qui sont formées en tant que fentes ou ouvertures (25a).

3. Système de chauffage (1) selon la revendication 1, **dans lequel** l'agencement de distribution d'air (20) comprend une pluralité de sorties d'air (25) qui sont formées entre des paires de lèvres (25b) qui sont dirigées vers l'intérieur du corps creux allongé (21).

4. Système de chauffage (1) selon la revendication 3, **dans lequel** les deuxièmes bords (15b) d'au moins certaines des brides de convecteur (15) sont disposés entre deux lèvres formant une paire de lèvres (25b).

5. Système de chauffage (1) selon l'une quelconque des revendications précédentes, **dans lequel** le radiateur (3) et le convecteur (11) sont formés à partir d'un métal extrudé ou d'un alliage métallique.

6. Système de chauffage (1) selon l'une quelconque des revendications précédentes, **dans lequel** la première paroi de radiateur (5), la deuxième paroi de radiateur (7) et l'au moins un canal de fluide (9) sont intégralement formés à partir d'un métal ou d'un alliage métallique extrudé.

7. Système de chauffage (1) selon l'une quelconque des revendications précédentes, **dans lequel** la première paroi de radiateur (5) a une forme complémentaire à la paroi du convecteur (13) et est agencée en contact avec la paroi du convecteur (13) le long d'au moins 80% de la première paroi de radiateur (5).

8. Système de chauffage (1) selon l'une quelconque des revendications précédentes, **dans lequel** le corps creux (21) est conçu comme un cylindre, et dans lequel une distance entre l'au moins une sortie d'air (25) et le convecteur (11) ne dépasse pas un diamètre du cylindre.

9. Système de chauffage (1) selon l'une quelconque des revendications précédentes, **dans lequel** le système de chauffage (1) comprend en outre au moins un support (30), ledit au moins un support (30) comprenant :
- des premiers moyens de fixation (32) pour fixer le support à un mur ;
- des deuxièmes moyens de fixation (34) pour fixer au moins l'un du radiateur allongé (3) et du convecteur allongé (11) ; et
- des troisièmes moyens de fixation (36) pour fixer le dispositif de distribution d'air (20).

10. Système de chauffage (1) selon l'une quelconque des revendications précédentes, **dans lequel** le système de chauffage (1) comprend un ventilateur (40) connecté à l'entrée d'air de l'agencement de distribution d'air (20), ledit ventilateur pouvant être commandé pour alimenter l'agencement de distribution d'air avec un flux d'air.

11. Système de chauffage (1) selon la revendication 10, **dans lequel** le ventilateur (40) est un ventilateur radial qui est agencé à l'intérieur du corps creux allongé (21) de l'agencement de distribution d'air (20).

12. Système de chauffage (1) selon la revendication 10 ou 11, **dans lequel** le flux d'air fourni par le ventilateur (40) est agencé pour être expulsé des sorties d'air (25) à une vitesse de 1-2 m / s.

13. Système de chauffage (1) selon l'une quelconque des revendications précédentes, **dans lequel** le système de chauffage (1) comprend une pompe (45) et au moins un conduit (47) qui est raccordé à l'au moins un canal de fluide (9) et à au moins l'un d'un système de refroidissement (49) d'un moteur à combustion interne de véhicule et d'un réchauffeur de fluide externe (51), ladite pompe (45) pouvant être commandée pour faire circuler un fluide dans l'au moins un conduit (47) et l'au moins un canal de fluide (9).

14. Véhicule (60), **caractérisé en ce que** le véhicule (60) comporte un habitacle (62) qui comprend un ou plusieurs systèmes de chauffage (1) selon l'une quelconque des revendications 1 à 13.

15. Procédé (100) pour chauffer un habitacle de véhicule (62) au moyen d'un système de chauffage (1) qui comprend ;
- un radiateur allongé (3) ayant une première paroi de radiateur (5), une deuxième paroi de radiateur (7) et au moins un canal de fluide (9) destiné à recevoir un fluide chauffé interposé entre la première paroi de radiateur (5) et la deuxième paroi de radiateur (7),
- un convecteur allongé (11) comprenant une paroi de convecteur (13) et une pluralité de brides allongées de convecteur (15) qui font saillie hors de la paroi de convecteur (13), le radiateur (3) étant fixé au convecteur (11) si bien que la première paroi de radiateur (5) fait face à la paroi de convecteur (13),
- une pompe (45) et au moins un conduit (47) qui est raccordé à l'au moins un canal de fluide (9) et à au moins l'un d'un système de refroidissement (49) d'un moteur à combustion interne de véhicule et d'un réchauffeur de fluide externe (51), ladite pompe (45) pouvant être commandée pour faire circuler un fluide dans l'au moins un conduit (47) et l'au moins un canal de fluide (9),
- un ventilateur (40) pouvant être commandé pour alimenter un flux d'air,
**caractérisé en ce que** le système de chauffage (1) comprend en outre un agencement de distribution d'air (20) ayant au moins une entrée d'air (23) adaptée pour recevoir un flux d'air provenant du ventilateur (40) et au moins une sortie d'air (25) pour expulser le flux d'air reçu, l'au moins une sortie d'air (25) étant dirigée vers les brides de convecteur (15), pour y diriger un flux d'air expulsé, et **en ce que** le procédé (100) comprend ;
- le chauffage (101) du fluide par au moins l'un du système de refroidissement (49) du moteur à combustion interne du véhicule et du réchauffeur de fluide externe (51),
- le pompage (102), par la pompe (45), du fluide chauffé par l'au moins un canal de fluide (9),
- l'expulsion (103), par l'au moins une sortie d'air (25) de l'agencement de distribution d'air (20), d'un flux d'air au-dessus des brides allongées du convecteur (15).
